# EUROPEAN PATENT APPLICATION

(11) **EP 4 484 653 A1**
(43) Date of publication of application: **01.01.2025**
(21) Application number: 23775197.9
(22) Date of filing: 06.03.2023
(51) Int. Cl.: E02F 9/20, B60L 58/12, B60L 58/18, B60L 53/10

(54) **APPARATUS FOR CHARGING BATTERY FOR CONSTRUCTION MACHINE, AND CHARGING METHOD USING SAME**

(30) Priority: 23.03.2022 KR 20220036254
(71) Applicant: HD Hyundai Infracore Co., Ltd., Incheon 22502 (KR)
(72) Inventor: NA, Jong Min, Incheon 21328 (KR); JEUNG, Beyng Kyu, Incheon 22547 (KR)
(74) Representative: Isarpatent
(86) International application number: PCT/KR2023/003028
(87) International publication number: WO 2023/182699

(57) **Abstract**

There is disclosed a battery charging device of a construction machine including a power distribution device that distributes electric energy stored in a battery pack to loads inside a construction machine and electrically connects or disconnects a charger for charging the battery pack to or from the battery pack; and a battery management system that electrically connects the charger to the battery pack by controlling the power distribution device and calculates a charging profile for charging the battery pack, and the charging profile may include a first charging section and a second charging section, the first charging section may include a second constant current charging section in which the battery pack is charged at a standard charging rate, and a first constant current charging section in which the battery pack is charged at a higher charging rate than the standard charging rate, and the second charging section may include a plurality of constant current charging sections in which the battery pack is charged at a constant charging rate for each charging section.

## Description

### [TECHNICAL FIELD]

Embodiments of the present disclosure relate to a battery charging device for construction machines powered by electric energy, and a charging method using the same.

### [BACKGROUND]

Equipment for earthmoving work at construction sites has been continuously improved and developed.

An excavator is a construction machine capable of performing various tasks such as excavation work to dig or fill the ground during construction and civil engineering work, breaker work such as breaking up light soil and rock, compactor work such as compacting soil, and crusher work such as cutting.

Such an excavator is usually provided with an engine such as a diesel engine to obtain driving power, and the power of this engine is used to drive a hydraulic pump. By supplying the operating fluid discharged from the hydraulic actuator such as a hydraulic motor or hydraulic cylinder, the rotation of the driving crawler or tires or each working part such as a spring, arm and bucket are operated.

Since the excavator equipped with the diesel engine uses fossil fuel such as kerosene to generate engine power, the fuel cost is high. Due to the special nature of heavy equipment, fuel consumption is high and also the excavator is also pointed out as a source of air pollution.

As part of an effort to solve these advantages, electric excavators using electric energy have emerged.

An electric excavator is powered by electric energy stored in batteries, so an efficient battery charging devices and a charging method are required.

### [DISCLOSURE]

### [TECHNICAL PROBLEM]

Construction machinery that uses electric energy as a power source requires technology that can inform users of the exact charging time of the battery to improve convenience.

An object of the present disclosure is to provide a battery charging device that may calculate the charging time before the start of battery charging of a construction machine and inform the user of the calculated time, thereby satisfy the charging time, and a charging method using the same.

Aspects according to the present disclosure are not limited to the above ones, and other aspects and advantages that are not mentioned above can be clearly understood from the following description and can be more clearly understood from the embodiments set forth herein.

### [TECHNICAL SOLUTION]

To solve the objects of the present disclosure, a battery charging device of a construction machine may include a power distribution device that distributes electric energy stored in a battery pack to loads inside a construction machine and electrically connects or disconnects a charger for charging the battery pack to or from the battery pack; and a battery management system that electrically connects the charger to the battery pack by controlling the power distribution device and calculates a charging profile for charging the battery pack. The charging profile may include a first charging section and a second charging section, the first charging section may include a second constant current charging section in which the battery pack is charged at a standard charging rate, and a first constant current charging section in which the battery pack is charged at a higher charging rate than the standard charging rate, and the second charging section may include a plurality of constant current charging sections in which the battery pack is charged at a constant charging rate for each charging section.

According to various embodiments of the present disclosure, the battery management system may calculate a charging rate for each of the plurality of constant current charging sections so that the battery pack can charged at a lower charging rate than the standard charging rate.

According to various embodiments of the present disclosure, the battery management system may calculate the first charging rate of the first constant current charging section for charging the battery pack at a higher charging rate than the standard charging rate based on an operation limit temperature of the battery pack.

According to various embodiments of the present disclosure, the battery management system calculates the first charging rate at a higher charging rate than the standard charging rate with a pre-defined margin plus the operation limit temperature of the battery pack.

According to various embodiments of the present disclosure, the battery management system may calculate the charging profile so that an excess charging amount of the first constant current charging section for charging the battery pack at the first charging rate higher than the standard charging rate can be the same as an insufficient charging amount of the plurality of constant current charging sections for charging the battery pack at a lower charging rate than the standard charging rate.

According to various embodiments of the present disclosure, the excess charging amount may be a difference between a charging amount of the battery pack at the first charging rate and a charging amount of the battery pack at the standard charging rate during the first constant current charging section, and the insufficient charging amount may be the difference between an accumulated charging amount in the plurality of constant current charging sections for charging the battery pack at a lower charging rate than the standard charging rate and a charging amount of the battery pack at the standard charging rate.

According to various embodiments of the present disclosure, the battery management system may calculate the charging profile including the plurality of constant current charging sections each having a step-down charging rate.

According to various embodiments of the present disclosure, the battery management system may change a charging rate in the final constant current charging section based on an actual charging amount of the battery pack and a charging amount of the battery pack calculated based on the charging profile excepted for the final constant current charging section.

According to various embodiments of the present disclosure, the battery management system may decrease a charging rate in the final constant current section, when an actual charging amount of the battery pack exceeds a calculated charging amount of the battery pack in the final constant current charging section, and may increase a charging rate of the final constant current charging section, when an actual charging amount of the battery pack is less than a calculated charging amount of the battery pack in the final constant current charging section.

According to various embodiments of the present disclosure, a charging method may include calculating a remaining charging amount of a battery pack when a quick charging mode starts; calculating a first charging section for charging the battery pack at a higher charging rate than a standard charging rate based on an outside temperature, a temperature of the battery pack and the remaining charging amount; calculating a step-type charging section for charging the battery pack at a lower charging rate than the standard charging rate; calculating a charging time in the first charging section and the step-type charging section; notifying a user of the calculated charging time; and starting charging of the battery pack at a charging rate applied to the first charging section and the step-type charging section.

According to various embodiments of the present disclosure, the calculating the step-type charging section may calculate the step-type charging section so that an excess charging amount of the first charging section may be the same as an inefficient charging amount of the step-type charging section.

According to various embodiments of the present disclosure, the excess charging amount may be the difference between a charging amount of the battery pack at the first charging rate and a charging amount of the battery pack at the standard charging rate during the first constant current charging section, and the insufficient charging amount may be the difference between an accumulated charging amount in the plurality of constant current charging sections for charging the battery pack at a lower charging rate than the standard charging rate and a charging amount of the battery pack at the standard charging rate.

According to various embodiments of the present disclosure, the charging method may further include changing a charging rate of a final charging section among the step-type charging sections based on an actual charging amount of the battery pack before the final charging section and a charging amount of the battery pack calculated in each charging section excluding the final charging section, after starting the charging of the battery pack.

According to various embodiments of the present disclosure, the changing the charging rate may include increasing of the charging rate of the final charging section, when an actual charging amount of the battery pack is less than a calculated charging amount of the battery pack in the final constant current charging section; and decreasing the charging rate of the final charging section, when an actual charging amount of the battery pack exceeds a calculated charging amount of the battery pack in the final constant current charging section.

According to various embodiments of the present disclosure, a construction machine may include a battery management system that calculates a charging profile comprising a first charging section comprising a second constant current charging section in which the battery pack is charged at a standard charging rate, and a first constant current charging section in which the battery pack is charged at a higher charging rate than the standard charging rate, and a second charging section comprising a plurality of constant current charging sections in which the battery pack is charged at a constant charging rate for each charging section; an operation device that receives an instruction or data to be used for operation control of the construction machine; an output device that generates output of at least one of visual information, auditory information and tactile information related to the operation of the construction machine; and a processor that controls at least one of the battery management system, the operation device and the output device

### [ADVANTAGEOUS EFFECTS]

The embodiments of the present disclosure may accurately predict a target charging time and may transmit the target charging time to the user before starting battery charging in the battery charging device and the charging method of the construction machine, thereby improving user convenience when using the construction machine.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description

### [DESCRIPTION OF DRAWINGS]

FIG. 1 is a view showing a construction machine according to various embodiments of the present disclosure;
FIG. 2 is a view to describe an excavator according to embodiments of the present disclosure;
FIG. 3 is a concept view of an excavator according to embodiments of the present disclosure;
FIG. 4 is a view showing a battery charging device according to embodiments of the present disclosure;
FIGS. 5 and 6 are graph showing an example of the battery charging machine according to embodiments; and
FIG. 7 is a flow chart showing a battery charging method using the battery charging device according to embodiments of the present disclosure.

### [DESCRIPTION OF SPECIFIC EMBODIMENTS]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated.

Hereinafter, a display device according to embodiments of the present disclosure will be described, referring to the accompanying drawings. It will be understood that when an element is referred to as being "connected with," "on" or "coupled to" another element, the element can be directly connected with the other element or intervening elements may also be present. In contrast, when an element is referred to as being "directly connected with" another element, there are no intervening elements present. Like reference numerals refer to like elements. Additionally, in the drawings, the thicknesses, proportions, and dimensions of components are exaggerated for effective description. "And/or" includes all of one or more combinations defined by related components.

Terminology that is used in the present disclosure is limited to only for embodiments herewith but made only to make it easy to understand the present disclosure. In various embodiments of the invention, the term "include," "comprise," "including," or "comprising," specifies a property, a fixed number, a step, a process, an element and/or a component, or a combination thereof, but does not exclude presence or addition of other properties, fixed numbers, steps, processes, elements and/or components, or a combination thereof.

It will be understood that the terms "first" and "second" are used herein to describe various components but these components should not be limited by these terms. The above terms are used only to distinguish one component from another. For example, a first component may be referred to as a second component and vice versa without departing from the scope of the invention. The singular expressions include plural expressions unless the context clearly dictates otherwise.

Therefore, it is obvious that a first element mentioned below may also be a second element within the technical features of the present disclosure. Unless defined otherwise, all terms used herein, including technical or scientific terms, have the same meaning as commonly understood by those skilled in the art to which the present disclosure pertains. The terms defined in a generally used dictionary can be construed as meanings that match with the meanings of the terms from the context of the related technology and are not construed as an ideal or excessively formal meaning unless clearly defined in the present application.

The terms 'part' or 'module' used in embodiments may mean a software or hardware element such as an FPGA or ASIC, and the 'part' or 'module' may perform predetermined roles. However, 'part' or 'module' is not limited to the software or hardware. The "part" or "module" may be provided in an addressable storage medium and configured to cause one or more processors to execute. Accordingly, as one example, a "part" or "module" may include elements such as software elements, object-oriented software elements, class elements and task elements, as well as processes, functions, attributes, procedures, subroutines, segments of program code, drivers, firmware, microcode, circuitry, data, database, data structures, tables, arrays and variables. The functions provided within the elements and "parts" or "modules" may be combined and "sub-part" or "modules" or further separated into additional elements and "parts" or "modules."

The steps of a method or algorithm described in connection with some embodiments of the present disclosure may be directly implemented in hardware, in a software module executed by a processor, or in a combination of the two. The software module may be provided in RAM memory, flash memory, ROM memory, EPROM memory, EEPROM memory, registers, a hard disk, a removable disk, a CD-ROM, or any other form of storage medium known in the art. An exemplary storage medium may be coupled to a processor such that the processor may read information from the storage medium and write information to the storage medium. Alternatively, a recording medium may be integral with the processor. The processor and the recording medium may be provided in an application specific integrated circuit ASIC. The ASIC may be provided in a user terminal.

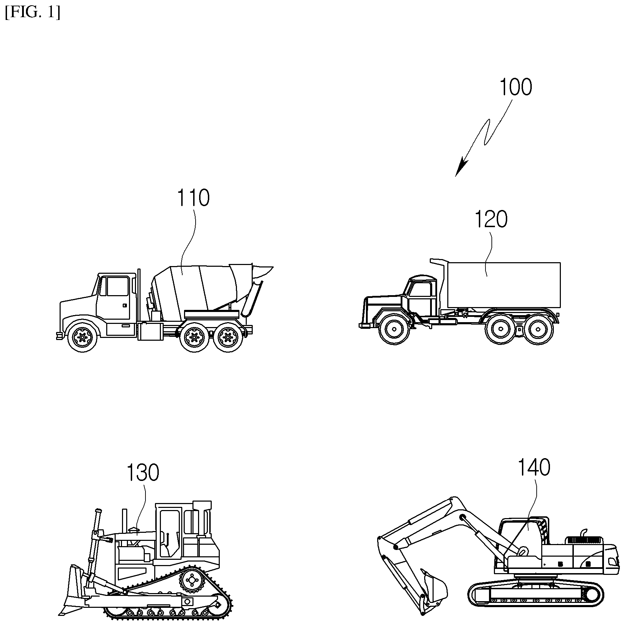

FIG. 1 is a view showing a construction machine according to various embodiments of the present disclosure.

According to various embodiments, the construction machine 100 refers to a machine that performs work at civil engineering or construction sites. As shown in FIG. 1, the construction machine 100 may include a mixer truck 110, a dump truck 120, a dozer 130 and an excavator 140. However, this is merely exemplary and the construction machine may include various machines such as an excavator, a crane, a wheel loader, a scraper, etc. Such the construction machine may perform tasks on user input or may perform autonomous tasks without a user. The autonomous task or operation may include all operations in which the construction machine 100 moves autonomously without user operation, and operations in which the construction machine 10 autonomously performs tasks that can be performed.

According to one embodiment, the construction machine may include a machine that performs work at a civil engineering site using electric energy as a power source.

For example, an excavator 140 using electric energy as a power source is equipped with an electric motor that rotates using electric energy as a power source, and uses the power of the electric motor to drive a hydraulic pump, and supplies working fluid discharged from the hydraulic pump to a hydraulic actuator such as a hydraulic motor or a hydraulic cylinder, thereby rotating a driving crawler or tires or operating each working part such as a boom, arm or bucket.

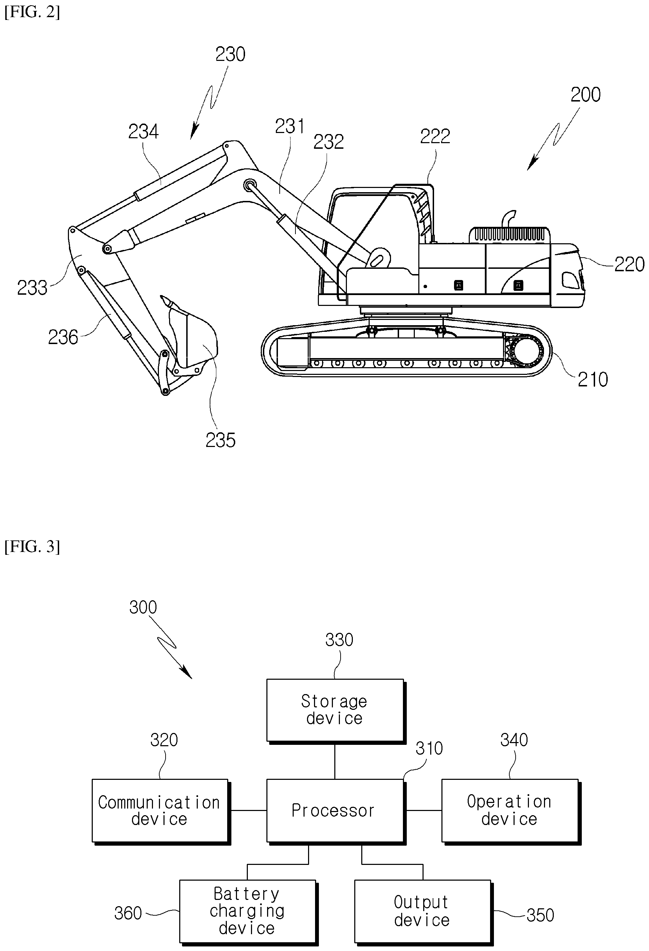

FIG. 2 is a view to describe an excavator according to embodiments of the present disclosure. In the following description, an excavator among the construction machines shown in FIG. 1 is used as an example, but the construction machine is not limited to an excavator.

Referring to FIG. 2, the excavator 200 may be composed of a lower body 210 that functions as a mover, an upper body 220 that is mounted on the lower body 210 and rotates 360 degrees, and a front working device 230 coupled to the front of the upper body 220. However, this is exemplary, but the embodiments of the present disclosure are not limited thereto. For example, in addition to the components of the excavator 200 described above, one or more other components (e.g., a plate coupled to the rear of the lower body 210) may be further provided.

According to the embodiments, the upper body 220 may include a built-in driver cabin 222 in which a driver can sit and operate, and an internal space (not shown) in which a power generation device (e.g., an electric motor) may be mounted. The driver cabin 222 may be provided in a location close to the work area. The work area is a space where the excavator 200 works and may be located in front of the excavator 200. For example, considering that the onboard driver is working under a secured field of vision and the position where the front working device 230 is mounted, the driver cabin 222 may be provided in a location that is biased to one side from the upper body 220 while being close to the work area, as shown in FIG. 2.

According to the embodiments, the front working device 230 may be mounted on an upper surface of the upper body 220, and may be a device for carrying out work such digging land or transporting heavy objects. According to one embodiment, the front working device 230 may include a boom 231 rotatably coupled to the upper body 220, a boom cylinder 232 that rotates the boom 231, an arm 233 rotatably coupled to a front end of the boom 231, an arm cylinder 234 that rotates the arm 233, a bucket 235 rotatably coupled to a front end of the arm 233, and a bucket cylinder 236 that rotates the bucket 235. When the excavator 200 is in operation, one end of the boom, one end of the arm 233 and one end of the bucket 235 may each individually rotate to maximize the area that the bucket 235 can reach. The front working device 230 mentioned above is well-known in many documents, so detailed description thereof is omitted.

According to the embodiments, the lower body 210 may be coupled to a lower surface of the upper body 220. The lower body 210 may include a driving body formed of a wheel type using wheels or a crawler type using caterpillar tracks. The driving body may implement forward, backward, leftward and rightward movements of the excavator by using the power generated by the power generation device as a power source. According to one embodiment, the lower body 210 and the upper body 220 may be rotatably coupled by a center joint.

FIG. 3 is a concept view of an excavator according to embodiments of the present disclosure.

In the following description, FIG. 3 may be described based on an excavator as one example of a construction machine 300, but the present disclosure is not limited to an excavator.

Referring to FIG. 3, the construction machine (e.g., an excavator 300) may include a processor 310, a communication device, a storage device 330, an operating device 340, an output device 350 and a battery charging device 360. However, this is exemplary and the embodiments of the present disclosure are not limited thereto. For example, at least one of the components provided in the construction machine 300 described above may be omitted, or one or more other components (e.g., an input device or an output device, etc.) may be added to the construction machine 300.

According to various embodiments, the communication device 320 may be configured to transceive data with an external device using wireless communication technology. The external device may include a control center (not shown) and other construction devices 110 to 130. For example, the communication device 320 may receive work instructions from the external device and transmit work-related information (e.g., work results) to the external device. At this time, communication technologies used by the communication device 320 include Global System for Mobile communication GSM, Code Division Multi Access CDMA, Long Term Evolution LTE, 5G, Wireless LAN WLAN, Wireless-Fidelity Wi-Fi, Bluetooth, Radio Frequency Identification RFID, Infrared Data Association IrDA, ZigBee, Near Field Communication NFC, etc.

According to various embodiments, the storage device 330 may store various data used by at least one component of the construction machine 300 (e.g., a processor 310, a communication device 320, an operating device 340, an output device 350 or a battery charging device 360). According to one embodiment, the storage device 330 may store specifications (e.g., model name, unique number, basic specifications), map data, etc. of the construction machine 300. For example, the storage device 330 may include at least one of a non-volatile memory device and a volatile memory device.

According to various embodiments, a sensor device (not shown) may collect information related to at least one of the status of the construction machine, a work area of the construction machine 300 or obstacles near the construction machine 300. For example, at least one of an angle sensor, an inertial sensor or a rotation sensor may be used as a component of the sensor device to collect the information related to the status of the construction machine 300. At least one of an electromagnetic wave sensor, a camera sensor, a radar, a lidar or an ultrasonic sensor may be used as the component of the sensor device to collect the information related to the work area and surrounding obstacles of the construction machine 300. However, it is exemplary and the embodiments of the present disclosure are not limited thereto. For example, various kinds of sensors capable of collecting the information related to the status of the construction machine 300, the work area of the construction machine 300 or the surrounding obstacles of the construction machine 300 may be used as the component of the sensor device.

According to various embodiments, the operation device 340 may control the operation of the construction machine (e.g., the excavator 300).

According to various embodiments, the operation device 340 may receive instructions or data to be used for the operation control of the excavator 300. The operation device 340 may include an operating lever for operating at least one component of the front working device 230 (e.g., boom 231, arm 233 and bucket 235), a handle for operating the steering of the lower body 210, a shift lever for operating the moving speed or forward-backward movement of the excavator 300, etc. According to one embodiment, the operating device 340 may be provided in the driver cabin 222 described referring to FIG. 2.

According to various embodiments, the output device 350 may be configured to generate the output related to the operation of the excavator 300. According to one embodiment, the output device 350 may include a display that outputs visual information, an audio data output device that outputs audible information, a haptic module that outputs tactile information. For example, the display may include a liquid crystal display LCD, a light emitting diode LED display, an organic light emitting diode OLED display, a micro electro mechanical system MEMS display or an electronic paper. Additionally, the audio data output device may include at least one of a speaker, earphone, earset or headset provided in the excavator 300 or connected to the excavator 300 via wired or wireless means.

The output device 350 according to various embodiments of the present disclosure may include a dashboard with a display that provides the user visual information about the charging time required to fully charge the batter.

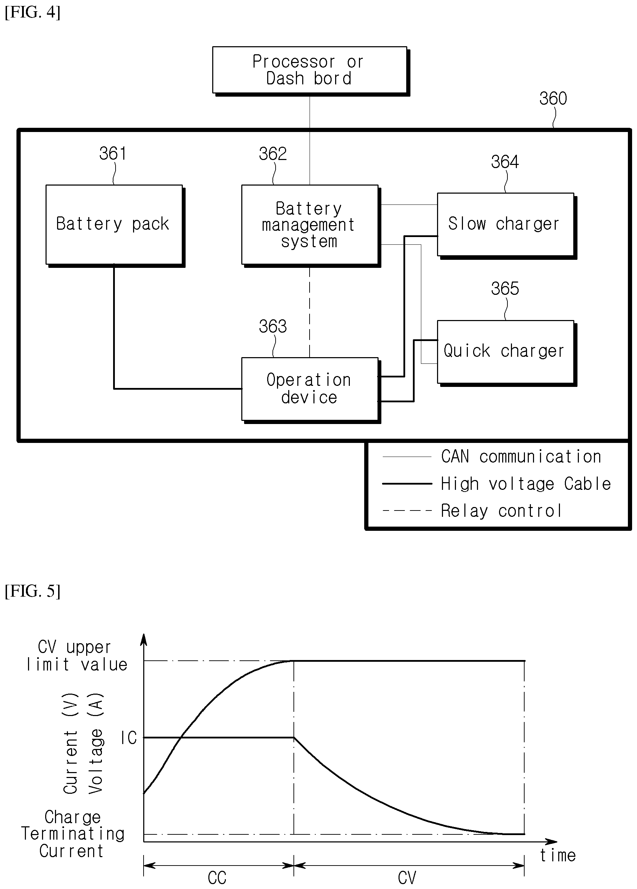

The description of the battery charging device 360 according to various embodiments is replaced with the description of FIG. 4 described below.

According to various embodiments, the processor 310 may be configured to control the overall operation of the construction machine 300. According to one embodiment, the processor 310 may control at least one of the components (e.g., the communication device 320, the storage device 330, the operating device 340, the output device 350 or the battery charging device 360) connected to the processor 310 by executing software (e.g., a program) stored in the storage device 330, and may perform various data processing or calculations. For example, as at least part of data processing or calculations, the processor 310 may store instructions or data received from another component in the storage device 330, process the instructions or data stored in the storage device 330, and store resulting data in the storage device 330. The processor 310 may be formed of a main processor and an auxiliary processor that can operate independently or together with the main processor. According to one embodiment, the processor 310 may perform controller area network CAN communication with the above-mentioned components (e.g., the communication device 320, the storage device 330, the operating device 340, the output device 350 or the battery charging device 360), but the present disclosure is not limited thereto.

FIG. 4 is a view showing a battery charging device according to embodiments of the present disclosure.

Referring to FIG. 4, the battery charging device 360 may include a battery pack 361, a battery management system 362, a power distribution device 363, a first charger 364 and a second charger 365.

The battery pack 361 may be a battery pack formed of a lithium-ion secondary battery.

The battery pack 361 may be electrically connected to the power distribution device 363 via a high voltage cable.

The battery management system 362 may include BMS, and it may monitor the battery pack 361 and control the charge amount of the battery pack 361 through communication with the first charger 364 or the second charger 365.

For example, the battery management system 362 may detect and monitor the storage capacity, i.e., the potential, of the battery pack 361 in various ways, such as detecting the remaining capacity (SOC: Stage of Charge) of the battery pack 361 and estimating the potential by detecting the internal resistance that changes based on the temperature.

In addition, the battery management system 362 may communicate with the first charger 364 or the second charger 365 using CAN communication, and may control the charge amount of the battery pack 361 by controlling the first charger 364 or the second charger 365.

The battery management system 362 may perform relay control of the power distribution device 363.

For example, the battery management system 362 may electrically connect the first charger 364 or the second charger 365 to the battery pack 361 through the relay control of the power distribution device 363.

Accordingly, the battery management system 362 may electrically connect one of the first and second chargers 364 and 365 to the battery pack 361 through the power distribution device 363, and control the charger electrically connected to the battery pack 361 through CAN communication, thereby controlling the charge amount of the battery pack 361.

The battery management system 362 may communicate with the processor 310 or the output device 350 (e.g., the dashboard) via CAN communication, and may inform the user of the status of the battery pack 361 including the charging time.

The power distribution device 363 may include a main relay that connects the first and second charger 364 and 365 to the battery pack 361. In addition, the power distribution device 363 may further include a pre-charge relay and a pre-charge resistor for adjusting the potential between one end to which the first and second chargers 364 and 365 are connected and the other end to which the battery pack 361 is connected.

At this time, the main relay and the pre-charge relay provided in the power distribution device 363 may be controlled by the battery management system 32.

In addition, the power distribution device 363 may be implemented as a power distribution unit PDU, and may distribute and provide electric energy transmitted through the battery pack 361 or the first charger 364 to load inside the construction machine. At this time, the loads inside the construction machine may include a power generation device (e.g., a motor).

The first charger 364 as a charger with lower output than the second charger 365 may include a slow charger (e.g., On Board Charge OBC), and may be electrically connected to the power distribution device 363 via the high voltage cable.

For example, the first charger 364 may be mounted on the construction machine and may include a slow charger for receiving AC power through a 220 voltage V wall power source and converting the received AC power into direct current DC to charge the battery pack 361.

The second charger 365 as a charger with a higher output than the first charger 364 may include a quick charger (e.g., quick charge QC), and may be electrically connected to the power distribution device 363 via the high voltage cable.

For example, the second charger 365 may be installed outside the construction machine and may include a quick charger for charging the battery pack 361 by receiving AC power through a 380-volt V 3-phase power supply and converting the received AC power into DC.

The batter charging device 360 of the construction machine according to various embodiments, with the above-mentioned configuration, may charge the battery pack 361 through the first charger 364 or charge the battery pack 361 through the second charger 365 under the control of the battery management system 362.

The battery management system 362 may provide a slow charging mode for charging the battery pack 361 through the first charger 364 and a quick charging mode for charging the battery pack 361 through the second charger 365.

The battery management system 362 may calculate a charging profile that applies different charge/discharge rates (i.e., C-rate) to each charging section in the quick charging mode.

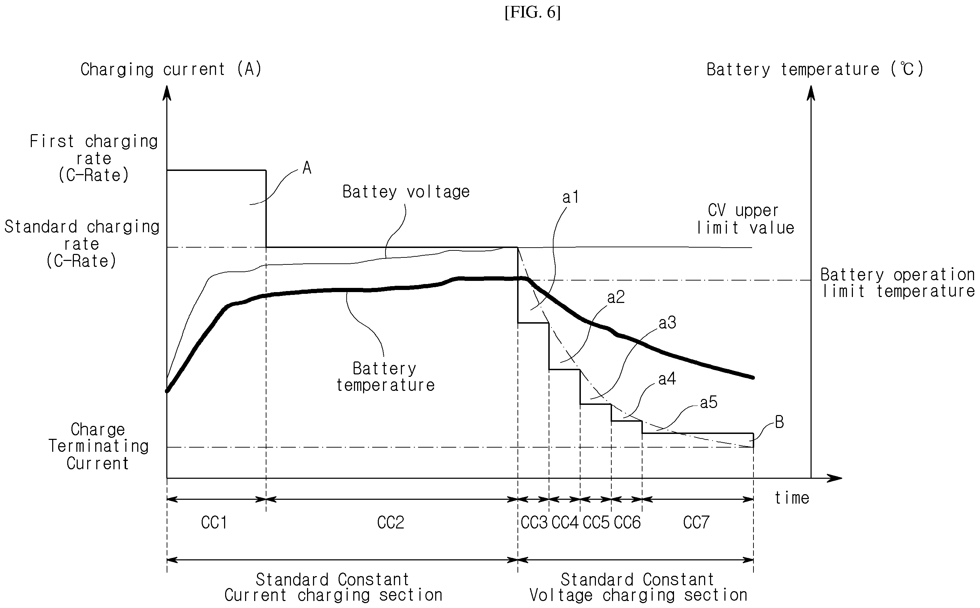

FIGS. 5 and 6 are graph showing an example of the battery charging machine according to embodiments.

In particular, FIG. 5 may be a graph illustrating a standard constant current charging section (i.e., standard CC section) and a standard constant voltage charging section (i.e., standard CV section) provided in the standard charging profile calculated by the battery management system 362 in the quick charging mode.

The standard CC section may be a section in which the battery pack 361 is charged with constant current.

At this time, in the standard CC charging section, which is the section where the battery pack 361 is charged with constant current, the voltage of the battery pack 361 may increase. When the voltage of the battery pack 361 reaches a constant voltage upper limit level (i.e., CV upper limit value), the battery pack 361 may be charged at constant voltage.

The standard CV charging section may be the section for charging the battery pack 361 at constant voltage.

At this time, in the standard CV charging section, the voltage of the battery pack 361 may be maintained at the CV upper limit value, and the current value flowing into the battery pack 361 may decrease nonlinearly. In addition, when the current flowing into the battery pack 361 reaches a charging terminating current value, the standard CV section may end and it may be determined that the battery pack 361 is fully charged.

The charge rate (i.e., C-rate) may be calculated based on the capacity of the battery pack 361 and the current flowing into the batter pack 361 during charging.

The battery pack 361 generates heat when charging, and the battery pack 361 might be damaged when the temperature exceeds the preset temperature.

Accordingly, the battery management system 362 may calculate the standard charging profile including a standard C-rate, a charging section in which charging is performed with a constant current based on the standard C-rate (i.e., standard CC charging section), and a section in which the battery pack 362 is charged with a constant voltage (i.e., standard CV charging section) based on the temperature of the battery pack 361 and the status of the charge (i.e., SOC) of the battery pack 361.

In addition, unless a battery cooling system is provided, external air (i.e., outside air) is used to dissipate the heat generated during the charging of the battery pack 361. Due to this, the battery management system 362 may calculate the standard charging profile including the standard C-rate, the standard CC charging section and the standard CV charging section based on the external air temperature, the current temperature and the SOC of the battery pack 362 during the charging of the batter pack.

At this time, the battery management system 362 may receive related data from the storage device 330 storing data on the correlation with the outside temperature obtained through the experiment, the temperature of the battery pack 361 during the charging, SOC and heat generation by charging rate.

Based on the received data stored in the storage device 330, the battery management system 362 may calculate the standard charging profile including the standard charging rate, the standard CC charging section and the standard CV charging section, as shown in the graph of FIG. 5.

FIG. 6 may be a graph showing a charging profile according to various embodiments of the present disclosure after the standard charging profile is calculated by the battery management system 362 in the quick charging mode.

In the quick charging mode, the battery management system 362 may calculate a first charging section CC1 for charging the battery pack 361 at a first C-rate that is higher than the standard C-rate based on the outside temperature, the current temperature of the battery pack 361 and the remaining capacity (i.e., the status of the capacity SOC) of the battery pack 361.

For example, in the quick charging mode, the battery management system 362 may calculate a first charging rate higher than 0.5C with a margin of 5 degree above the operational temperature limit (e.g., approximately 55 degrees) of the battery pack 361, when the standard charging rate of the standard CC charging section is 0.5C. At this time, the first charging rate may be calculated by reflecting the current battery pack temperature and SOC.

After calculating the first charging section CC1 for charging the battery pack 361 at the first C-rate, the battery pack 361 may calculate a second charging section CC2 for charging the battery pack 361 at the standard C-rate. At this time, the standard CC section may be divided into a first charging section CC1 and a second charging section CC2. The remaining charging section in the standard CC section excluding the first charging section CC1 may be the second charging section CC2.

The battery management system 362 may calculate a plurality of charging sections CC3, CC4, CC5, CC6 and CC7 corresponding to the standard CV section, after calculating the first and second charging sections CC1 and CC2 corresponding to the standard CC section.

For example, the battery management system 362 may divide the standard CV section, in which the standard C-rate has a non-linear curve shape, into third to seventh charging sections CC3, CC4, CC5, CC6 and CC7.

In addition, the battery management system 362 may calculate so that each of the first to sixth charging sections CC3, CC4, CC5 and CC6 has the same charging time, and may calculate the seventh charging section CC7, which is the final charging section, based on the third to sixth charging sections CC3, CC4, CC5 and CC6.

For example, the battery management system 362 may calculate a seventh charging section CC7 that has a longer charging time than each of the third to sixth charging sections CC3, CC4, CC5 and CC6. Or, the battery management system 362 may calculate a seventh charging section CC7 that has a longer charging time than the total section of the third to sixth charging sections CC3, CC4, CC5 and CC6.

At this time, the battery management system 362 may calculate that each C-rate of the third to sixth charging sections CC3, CC4, CC5 and CC6 may not exceed the standard C-rate of the standard CV section.

As shown in FIG. 6, each C-rate of the third to seventh charging sections CC3, CC4, CC5, CC6 and CC7 may have a constant value in each charging section.

Accordingly, since each charging section has the constant C-rate, the charging profile may be charging profile having multiple CC charging sections like the first to seventh charging sections CC1, CC2, CC3, CC4,CC6 and CC7 shown in FIG. 6

In the third to sixth charging sections CC3, CC4, CC5 and CC6, the battery pack 361 is charged at a lower C-rate than the standard C-rate of the standard CV section, so that the accumulated charging amount in the third to sixth charging sections CC3, CC4, CC5 and CC6 may be less than the accumulated charging amount according to the standard CV C-rate. In addition, since the battery pack 361 is charged at a lower C-rate than the standard CV section in the third to sixth charging sections CC3, CC4, CC5 and CC6, the temperature of the battery pack 3361 may be cooled down faster than the standard CV section.

a1 of FIG. 6 may show the difference between the charging amount in the standard CV charging method and the charging amount in the charging method proposed in the present disclosure in the third charging sections CC3.

a2 of FIG. 6 may show the different between the charging amount in the standard CV charging method and the charging amount in the charging method proposed in the present disclosure in the fourth charging sections CC4.

a3 of FIG. 6 may show the different between the charging amount in the standard CV charging method and the charging amount in the charging method proposed in the present disclosure in the fifth charging sections CC5.

a4 of FIG. 6 may show the different between the charging amount in the standard CV charging method and the charging amount in the charging method proposed in the present disclosure in the sixth charging sections CC6.

a5 and B of FIG. 6 may show the different between the charging amount in the standard CV charging method and the charging amount in the charging method proposed in the present disclosure in the seventh charging sections CC7.

As described above, a1 to a5 of FIG. 6 may show the charging amount of the third to seventh charging sections CC3, CC4, CC5, CC6 and CC7 that is less than the charging amount in the standard CV charging method. B of FIG. 6 may show the charging amount of the seventh charging section CC7 that is greater than the charging amount in the standard CV charging method.

The standard charging profile and the quick charging profile including the first to seventh charging sections CC1, CC2, CC3, CC4, CC5, CC6 and CC7 according to various embodiments of the present disclosure are the charging profiles for charging the battery pack 361 to 100%. Due to this, the charging profile according to one embodiment of the present disclosure may be calculated such that the sum of the excess charging amount A of the first charging section CC1 for charging a larger amount of electric energy than the standard CC section of the standard charging profile and the excess charging amount B of the seventh charging section CC7 for charging a longer amount of electric energy than the standard CV charging method can be the same as the sum of the insufficient charging amounts (a1+a2+a3+a4+a5) of the third to seventh charging sections CC3, CC4, CC5, CC6 and CC7 for charging a smaller amount of electric energy than the standard CV charging method.

Accordingly, the charging profile according to various embodiments of the present disclosure may satisfy the formula of A + B = a1 + a2 + a3 + a4 + a5.

In addition, the battery management system 362 may compare the remaining time until the end of the charging after the sixth charging section CC6 and the accumulated charging amount up to the present, and may change the C-rate of the seventh charging section CC7 based on the result of comparison.

For example, the battery management system 362 may charge the battery pack 361 at a higher C-rate than the calculated C-rate, when the charging amount of the battery pack 361 is insufficient compared to the remaining time in the seventh charging section CC7, and may charge the battery pack 361 at a lower C-rate than the calculated C-rate, when the charging amount of the battery pack 361 exceeds the remaining time.

As a result, the battery management system 362 may compare the actual charging amount of the battery pack 361 with the calculated charging amount based on the remaining time until the end of the charging in the seventh charging section CC7, and may charge the C-rate of the seventh charging section CC7 based on the result of comparison.

The battery charging device according to various embodiments of the present disclosure may calculate a charge profile including a plurality of charging sections at different C-rates in the quick charging mode. At this time, the first charging section may be a section in which charging is performed at a higher C-rate than the standard C-rate, and the first charging section may be calculated based on the outside temperature, the temperature of the battery pack and SOC.

In addition, the battery charging device may calculate a charging profile in which the battery pack is charged at the standard C-rate and a plurality of charging sections in which the battery pack is charged at a lower C-rate than the standard C-rate.

At this time, the batter charging device according to various embodiments of the present disclosure may calculate the charging profile so that the excess charging amount of the first charging section for charging at a higher C-rate than the standard C-rate can be the same as the deficiency charging amount of the plurality of charging sections for charging at a lower C-rate than the standard C-rate.

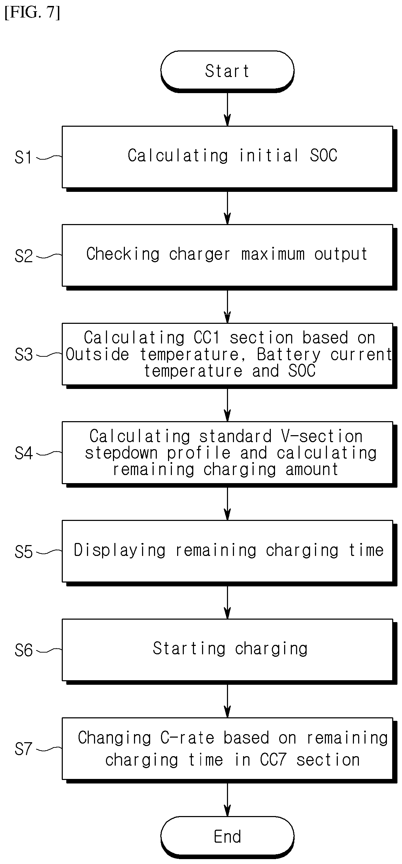

FIG. 7 is a flow chart showing a battery charging method using the battery charging device according to embodiments of the present disclosure.

Referring to FIG. 7, the battery charging method using the battery charging device according to various embodiments of the present disclosure may include a remaining capacity (i.e., SOC) calculating operation S1, a charger maximum output checking operation S2, a first charging section calculating operation S3, a step-type charging sections calculating and charging time calculating operation S4, a charging time displaying operation S5, and a charging start operation S6 and a C-rate changing operation of the final charging section CC7 S7.

The remaining capacity calculating operation S1 may be an operation for calculating an initial remaining capacity SOC of the battery pack 361 when the quick charging mode starts.

The charger maximum output checking operation S2 may be an operation for checking the maximum output of the quick charger.

The first charging section calculating operation S3 may include an operation for calculating the first charging section CC1 based on the outside temperature, the current temperature of the battery and the calculated SOC, when charging the battery pack 261 at a higher C-rate than the standard C-rate. At this time, when the fist charging section CC1 is calculated, the second charging section CC2 may be calculated as the section excluding the first charging section CC1 from the standard CC section.

The step-type charging sections calculating and charging time calculating operation S4 may include an operation of dividing the standard CV section into the plurality of charging sections CC3, CC4, CC5, CC6 and CC7 and then calculating the charging section in which a lower C-rate than the standard C-rate for each divided charging section CC3, CC4, CC5, CC6 and CC7 is applied. At this time, each C-rate of the plurality of charging sections divided from the standard CV section may have a step-down value.

In addition, the step-type charging sections calculating and charging time calculating operation S4 may include an operation of calculating the charging time based on a C-rate calculated for each charging section and a charging amount of each charging section.

Generally, the charging current based on the C-rate may mean the charging current divided by the constant capacity of the battery. For example, when the battery capacity is 1Ah and it is charged with a current of 1A, it is indicated as a C-rate of 1amperes, which means that the battery needs to be charged for 1 hour to be fully charged.

A C-rate of 2C indicates charging with a current of 2 amperes and requires 30 minutes of charging to fully charge the battery, while a C-rate of 0.5c indicates charging with a current of 0.5 amperes and requires 2 hours of charging to fully charge the batter.

Accordingly, the C-rate of 2C may mean that to fully charge the battery, twice as much current will be used as when the C-rate is 1c, reducing the charging time by half. The C-rat of 0.5C may mean that the charging time will be doubled using half the current as when the C-rate is 1C.

Therefore, when the charging amount of each charging section CC1, CC2, CC3, CC4, CC5, CC6 and CC7 and the C-rate for each charging section are calculated, the charging current and the charging time of each charging section may be calculated. The sum of the charging times calculated for the respective charging sections may be calculated as the charging time required to fully charge the battery.

The charging time displaying operation S5 may include an operation of notifying the user of the calculated charging time as visual or auditory information through a display (e.g., a dashboard) or speaker.

The charging starting operation S6 may include an operation of controlling the quick charger 365 to charge the battery pack 361 at the calculated C-rate of each charging section CC1 to Cc6.

The C-rate changing operation of the final charging section CC7 S7 may be an operation of changing the c-rate to adjust the charging time calculated in the operation S4.

According to one embodiment, The C-rate changing operation of the final charging section CC7 S7 may include an operation of charging the battery pack 361 at a higher C-rate than the C-rate of the final charging section CC7 calculated when the actual charging amount of the batter pack 361 is less than the charging amount in the charging sections CC1 to CC6 calculated in S4, based on the charging of the battery pack 361 at the C-rate in each charging section CC1 to CC6 after the charging starting operation S6.

According to another embodiment, the C-rate changing operation of the final charging section CC7 S7 may include an operation of charging the battery pack 361 at a lower C-rate than the C-rate of the final charging section CC7 calculated when the actual charging amount of the batter pack 361 exceeds the charging amount in the charging sections CC1 to CC6 calculated in S4, based on the charging of the battery pack 361 at the C-rate in each charging section CC1 to CC6 after the charging starting operation S6.

Therefore, the battery charging device and the charging method using the same according to various embodiments of the present disclosure may provide the user with the charging time required to fully charge the battery pa 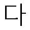 361 before starting the battery charging, and may form the charging that satisfies the provided charging time, thereby improving the user convenience.

Although the present invention has been described with reference to the exemplified drawings, it is to be understood that the present invention is not limited to the embodiments and drawings disclosed in this specification, and those skilled in the art will appreciate that various modifications are possible without departing from the scope and spirit of the present invention. Further, although the operating effects according to the configuration of the present invention are not explicitly described while describing an embodiment of the present invention, it should be appreciated that predictable effects are also to be recognized by the configuration.

## Claims

1. A battery charging device of a construction machine comprising:
a power distribution device that distributes electric energy stored in a battery pack to loads inside a construction machine and electrically connects or disconnects a charger for charging the battery pack to or from the battery pack; and
a battery management system that electrically connects the charger to the battery pack by controlling the power distribution device and calculates a charging profile for charging the battery pack,
wherein the charging profile comprises a first charging section and a second charging section,
the first charging section comprises a second constant current charging section in which the battery pack is charged at a standard charging rate, and a first constant current charging section in which the battery pack is charged at a higher charging rate than the standard charging rate, and
the second charging section comprises a plurality of constant current charging sections in which the battery pack is charged at a constant charging rate for each charging section.

2. The battery charging device of the construction machine device of claim 1, wherein the battery management system calculates a charging rate for each of the plurality of constant current charging sections so that the battery pack is charged at a lower charging rate than the standard charging rate.

3. The battery charging device for the construction machine of claim 2, wherein the battery management system calculates the first charging rate of the first constant current charging section for charging the battery pack at a higher charging rate than the standard charging rate based on an operation limit temperature of the battery pack.

4. The battery charging device for the construction machine of claim 3, wherein the battery management system calculates the first charging rate at a higher charging rate than the standard charging rate with a pre-defined margin plus the operation limit temperature of the battery pack.

5. The battery charging device of the construction machine of claim 2, wherein the battery management system calculates the charging profile so that an excess charging amount of the first constant current charging section for charging the battery pack at the first charging rate higher than the standard charging rate can be the same as an insufficient charging amount of the plurality of constant current charging sections for charging the battery pack at a lower charging rate than the standard charging rate.

6. The battery charging device of the construction machine of claim 5, wherein the excess charging amount is a difference between a charging amount of the battery pack at the first charging rate and a charging amount of the battery pack at the standard charging rate during the first constant current charging section, and
the insufficient charging amount is the difference between an accumulated charging amount in the plurality of constant current charging sections for charging the battery pack at a lower charging rate than the standard charging rate and a charging amount of the battery pack at the standard charging rate.

7. The battery charging device of the construction machine of claim 2, wherein the battery management system calculates the charging profile including the plurality of constant current charging sections each having a step-down charging rate.

8. The battery charging device of the construction machine of claim 7, wherein the battery management system changes a charging rate in the final constant current charging section based on an actual charging amount of the battery pack and a charging amount of the battery pack calculated based on the charging profile excepted for the final constant current charging section.

9. The battery charging device of the construction machine of claim 8, wherein the battery management system decreases a charging rate in the final constant current section, when an actual charging amount of the battery pack exceeds a calculated charging amount of the battery pack in the final constant current charging section, and increases a charging rate of the final constant current charging section, when an actual charging amount of the battery pack is less than a calculated charging amount of the battery pack in the final constant current charging section.

10. A charging method comprising:
calculating a remaining charging amount of a battery pack when a quick charging mode starts;
calculating a first charging section for charging the battery pack at a higher charging rate than a standard charging rate based on an outside temperature, a temperature of the battery pack and the remaining charging amount;
calculating a step-type charging section for charging the battery pack at a lower charging rate than the standard charging rate;
calculating a charging time in the first charging section and the step-type charging section;
notifying a user of the calculated charging time; and
starting charging of the battery pack at a charging rate applied to the first charging section and the step-type charging section.

11. The charging method of claim 10, wherein the calculating the step-type charging section calculates the step-type charging section so that an excess charging amount of the first charging section can be the same as an inefficient charging amount of the step-type charging section.

12. The charging method of claim 11, wherein the excess charging amount is a difference between a charging amount of the battery pack at the first charging rate and a charging amount of the battery pack at the standard charging rate during the first constant current charging section, and
the insufficient charging amount is the difference between an accumulated charging amount in the plurality of constant current charging sections for charging the battery pack at a lower charging rate than the standard charging rate and a charging amount of the battery pack at the standard charging rate.

13. The charging method of claim 10, further comprising:
changing a charging rate of a final charging section among the step-type charging sections based on an actual charging amount of the battery pack before the final charging section and a charging amount of the battery pack calculated in each charging section excluding the final charging section, after starting the charging of the battery pack.

14. The charging method of claim 13, wherein the changing the charging rate comprises,
increasing the charging rate of the final charging section, when an actual charging amount of the battery pack is less than a calculated charging amount of the battery pack in the final constant current charging section; and
decreasing the charging rate of the final charging section, when an actual charging amount of the battery pack exceeds a calculated charging amount of the battery pack in the final constant current charging section.

15. A construction machine comprising:
a battery management system that calculates a charging profile comprising a first charging section comprising a second constant current charging section in which the battery pack is charged at a standard charging rate, and a first constant current charging section in which the battery pack is charged at a higher charging rate than the standard charging rate, and a second charging section comprising a plurality of constant current charging sections in which the battery pack is charged at a constant charging rate for each charging section;
an operation device that receives an instruction or data to be used for operation control of the construction machine;
an output device that generates output of at least one of visual information, auditory information and tactile information related to the operation of the construction machine; and
a processor that controls at least one of the battery management system, the operation device and the output device.
